# EUROPEAN PATENT SPECIFICATION

(11) **EP 2 815 797 B1**
(45) Date of publication and mention of the grant of the patent: **25.05.2016**
(21) Application number: 13172995.6
(22) Date of filing: 20.06.2013
(51) Int. Cl.: B01D 35/30, B01D 29/11, B01D 29/52, B01D 29/64

(54) **Self-cleaning filter and method**
Selbstreinigender Filter und Verfahren
Filtre auto-nettoyant et procédé

(43) Date of publication of application: 24.12.2014
(73) Proprietor: Bernoulli System AB, 224 78 Lund (SE)
(72) Inventor: STEINER, Ulf, 224 56 LUND (SE); KARLSSON, Krister, 234 32 LOMMA (SE)
(74) Representative: Johansson, Lars E.

(56) References cited:
- EP-A1- 2 508 238
- WO-A1-2008/086447
- DE-A1-102005 055 555

## Description

### TECHNICAL FIELD

The present invention relates to a self-cleaning filter for the filtering of a pressurised liquid, preferably natural raw water, which filter has a filter body that comprises and/or houses: an inlet; an axial filter basket with an inlet open end, a reject open end and a wall with filter apertures; a transversal outlet; and a reject outlet with a reject valve. The invention also relates to a method of cleaning said self-cleaning filter.

### PRIOR ART AND PROBLEMS

Self-cleaning filters especially for natural raw water are used in the industry to protect downstream equipment such as nozzles, heat exchangers and UV-sterilisers, or for coarse pre-filtration before finer filtration by other techniques. Such self-cleaning filters work with continuous filtering operation and intermittent cleaning operation is initiated automatically at predefined time intervals and/or when a predefined pressure differential over the filtering element/filter basket is reached. Even during cleaning operation, the filter continues to supply a flow of filtered liquid via its outlet, at the same time as impurities and particles that are being rinsed from the filter basket are discarded via the filter's reject outlet together with a smaller flow of liquid.

From SE 464 062, there is known a filter that is self-cleaning by the principle of Bernoulli and that is sold under the trade name "the Bernoulli Filter". The Bernoulli Filter is automatically self-cleaning by aid of a cleaning element operable by an actuator to travel along the filter basket's centre axis, whereby a travelling annular gap is formed between a cleaning element and an inside of the filter basket wall, thereby significantly increasing the velocity of the liquid in said gap and its proximity. According to the principle of Bernoulli, the increased velocity results in a locally decreased pressure and thus a reversed liquid flow through the filter apertures in the filter basket wall, whereby impurities stuck in the apertures are released and then led out from the filter through the reject outlet.

Over the years, there has been an increased demand for higher liquid flows and finer filtration degrees. To enable a higher flow, the filter body and the filter basket must be scaled up in size, but larger filter basket diameters do not allow for fine filtration degrees. This is because larger filter basket diameters result in higher stress in the filter basket wall due to internal pressure when the filter basket is clogged. Hence, larger filter basket diameters require thicker filter basket walls which is incompatible with fine filtration degrees. The latter is especially true for filters that use the Bernoulli principle for cleaning, because experience has shown that the filter basket wall for such filters needs an open area of at least about 20 % for the principle to work efficiently, which is very hard to achieve technically for a comparatively thick wall with fine apertures. In this context, open area is defined as the sum of the area of the apertures divided by the total filter basket wall area in which those apertures are located. Moreover, large filter baskets, such as of diameters above 500 mm or above 700 mm, are heavy and impractical to handle and difficult to fit snugly in the filter body.

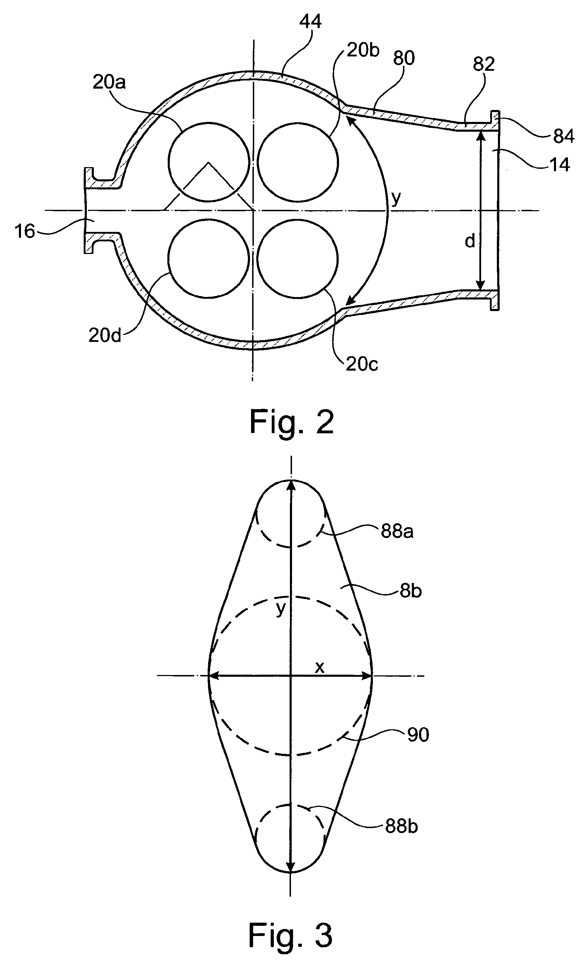

A similar type of self-cleaning filter operating according to the Bernoulli principle is known from EP 2,508,238. That filter comprises a plurality of filter baskets that each houses a cleaning element. One problem with that filter is that in case the outlet is directed transversally to the axial filter baskets (as shown in Fig. 3 e.g.), there will be "rear" filter baskets and "front" filter baskets in relation to that outlet, resulting in that the front filter baskets will obstruct the flow from the rear filter baskets to the outlet. The solution to this is to position the outlet axially (as shown in Fig. 7 e.g.) in the centre between all filter baskets. This has the major drawback however that the filter body becomes much larger in volume and dimension.

A pipe line strainer with a single filter basket is known from US 6,318,564, in which the flow distribution has been improved while keeping down volume and dimension, by providing a transversal outlet with a reducing profile of a conical reducer of decreasing diameter in the direction of fluid flow. This solution is however not beneficial for a filter with a cleaning operation according to the Bernoulli principle, because the conical reducer would give an opening in the filter body with a long axis in the filter's axial direction, whereby a large portion of the upstream end of the filter basket would be basically non-productive in dirt accumulation and also the cleaning action of the cleaning element would be impaired in the portion of the filter basket level with the long axis outlet.

### ACCOUNT OF THE INVENTION

The present invention aims at providing a self-cleaning filter that solves at least some of the problems of the above problem complex.

Accordingly, the invention aims at providing a self-cleaning filter that is able to handle large liquid volume flows at fine filtration degrees, with a beneficial flow profile and a limited pressure loss, while being equal or smaller in filter size/volume in relation to capacity as compared with prior art filters of the same type.

In this context, filtration degree is defined as the smallest distance over a given aperture in the filter basket wall. For circular apertures, the filtration degree is equal to aperture diameter. For slot apertures, such as provided by wedge wire screens, the filtration degree is equal to the width of the slot.

The above and other objectives are accomplished by the self-cleaning filter according to the invention, as defined in claim 1. Thus, the self-cleaning filter according to the invention has a filter body with a diameter D, that comprises and/or houses:
a) an inlet,
b) an axial filter basket with an inlet open end, a reject open end and a wall with filter apertures,
c) a transversal outlet, and
d) a reject outlet with a reject valve;
together defining a first F1 and a second F2 flow path for incoming pressurised liquid; where:
- said first flow path F1 is from said inlet 12, via said filter basket inlet open end and then via said filter apertures in said filter basket wall, to said transversal outlet; and
- said second flow path F2 is from said inlet, via said filter basket inlet open end and then via said filter basket reject open end, to said reject outlet when said reject valve is open;
said filter body furthermore housing a cleaning element operable by an actuator to travel along said filter basket's centre axis, whereby a travelling gap is formed between said cleaning element and an inside of said filter basket wall, thereby significantly increasing the velocity of the liquid in said gap and its proximity, which increased velocity results in a locally decreased pressure and thus a reversed liquid flow RF through said filter apertures in said filter basket wall, thus releasing impurities stuck in the apertures, which impurities are then led out from the filter through said reject outlet via said second flow path when said reject valve is open.

According to the invention, said transversal outlet comprises: an upstream end which is defined by an opening in the filter body envelope surface, which opening has a minor axis x in a direction essentially parallel with the axial filter basket and a major axis y that is perpendicular to said minor axis x, a downstream end piece which is defined by having a circular cylindrical cross-section with a diameter d, and a transition piece that interconnects said opening with said end piece, where D > 1.5d, x < d, and y > 1.1d.

According to a preferred embodiment of the invention, y > 1.2d, preferably y > 1.4d and most preferred y > 1.6d, and/or x < 0.9d, preferably x < 0.8d and most preferred x < 0.7d.

According to a preferred embodiment of the invention, said filter body also houses one or more additional filter baskets arranged in parallel with said first filter basket, defining additional first and second flow paths and arranged to be cleaned in the same manner as said first filter basket. By this solution, the same total filter area can be achieved with two or more filter baskets as with a single filter basket according to prior art SE 464 062, but with a smaller filter body size, volume and/or length. For example, four cylindrical filter baskets of diameter 400 mm and length 1200 mm has the same total filter area as one cylindrical filter basket of diameter 800 mm and length 2400 mm. The total filter area determines, together with the dimensions of the filter's inlet and outlet, the maximum size of the inlet volume flow in terms of pressure drop from inlet to outlet. Thus, thanks to the preferred embodiment of the invention, a large volume flow can be filtered by a relatively small filter. Also, the smaller diameter of the filter baskets means that relatively fine filtration degrees can be used without strength problems and also that the filter baskets are easier to handle. Preferably, each filter basket has an individual cleaning element operable by a corresponding individual actuator. All actuators are then controlled to be operated essentially simultaneously, whereby all filter baskets are cleaned simultaneously.

By the inventive configuration, the outlet, at its upstream connection to the filter body, is broadened in the circumferential direction around the filter body, at the same time as it is narrowed in the axial direction of the filter body and the filter basket(s), as compared to the diameter d of the outlet's downstream end piece. Thereby, the flow profile from the filter basket to the outlet is improved as the liquid flows more easily from the rear side of the filter basket, or from the "rear" filter baskets in case of a multi-basket filter, thanks to y being larger than 1.1 d. At the same time, the length of the filter basket(s) is used more efficiently for dirt accumulation since the "non-productive" portion of the filter basket(s) is minimized thanks to x being smaller than d. Together, these inventive features result in a filter body of smaller diameter and length than would be necessary when using a conventional circular cylindrical outlet of diameter d.

The number of filter baskets in the filter may conveniently be 2-12, preferably 2-8 and most preferred 4-6. Suitably, the total cross-sectional area of the preferably cylindrical filter baskets is 0.7-1.2, even more preferred 0.8-1.1, times the cross-sectional area of the filter's inlet. Moreover, the total cross-sectional area of the filter baskets is suitably 0.3-1.0, even more preferred 0.4-0.8, times the cross-sectional area of the filter body outside the filter baskets, i.e. excluding the total cross-sectional area of the filter baskets' outer dimension. The length of each filter basket is preferably 2-4, even more preferred 3-3.5, times its diameter. The filter's inlet may have a diameter of e.g. 300-1600 mm, preferably 400-1200 mm and even more preferred 500-1000 mm. The filter's outlet preferably has essentially the same diameter d as its inlet. All dimensions are referring to inner dimensions if not otherwise stated.

Advantageously, the filter body is manufactured from glass fibre reinforced plastics (GRP), such as glass fibre reinforced polyester, vinyl ester or epoxy, which makes it completely corrosion resistant to saline sea water that optionally is chlorinated e.g., although filter bodies in stainless steel or lined carbon steel may be adequate for less corrosive liquids such as fresh water. The hand crafting of glass fibre reinforced plastics has the further advantage however that it facilitates manufacturing of the specially shaped outlet, e.g. on a collapsible mould or by shaping a thin and not fully hardened pipe to the desired shape and then, after it has hardened, adding layers of GRP to the desired thickness and strength.

The filter baskets are suitably made of titanium or stainless steel and may e.g. be made from wedge wire screen, perforated plate (by punching or water cutting, e.g.) or expanded metal, with a filtration degree of 0.01-10 mm, preferably 0.03-6 mm, even more preferred 0.05-4 mm. The travelling gap formed between the edge of the cleaning element and the inside of the filter basket wall is suitably 1-10 %, more preferred 1-5 %, of the diameter of the cleaning element.

The invention also relates to a method of cleaning the self-cleaning filter, comprising the steps of:
a) opening said reject valve;
b) operating all said individual actuators essentially simultaneously so that said individual cleaning elements travel along said filter baskets' centre axes in a direction towards their inlet open ends;
c) immediately after step b, operating all said individual actuators essentially simultaneously so that said individual cleaning elements travel along said filter baskets' centre axes in a direction towards and out from their reject open ends;
d) optionally repeating steps b-c,
e) closing said reject valve.

### BRIEF DESCRIPTION OF THE DRAWINGS

In the following, the invention will be described in greater detail with reference to the drawings, of which:
Fig. 1 is showing a side view, partially in vertical cross-section, of a self-cleaning filter according to a preferred embodiment of the invention,
Fig. 2 is showing the filter body and filter baskets in Fig. 1 in horizontal cross-section,
Fig. 3 is showing the opening for the outlet in the filter body envelope surface.

### DETAILED DESCRIPTION OF THE DRAWINGS

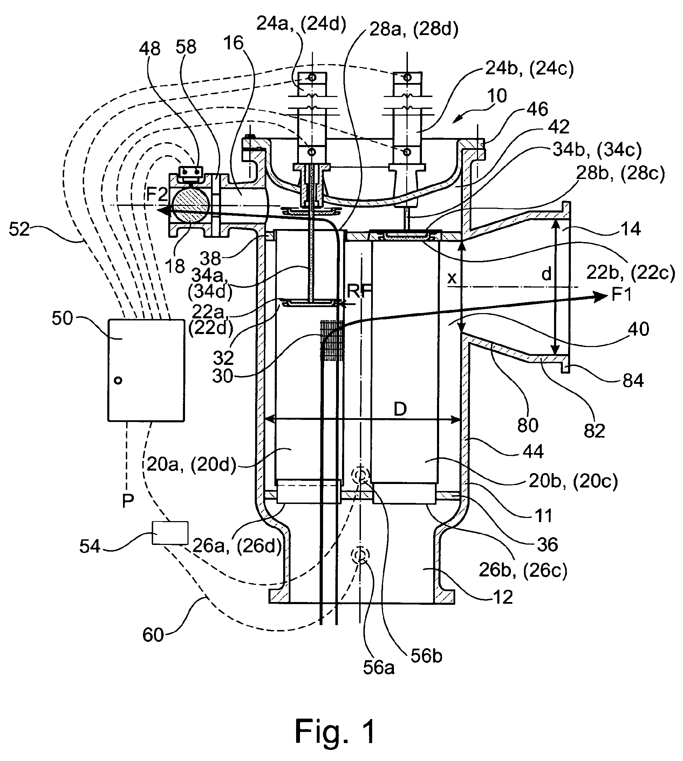

In the following and with reference to Figs. 1 and 2, the invention is exemplified by a filter, generally denoted 10, which has a filter body 11 with an inlet 12 of diameter 800 mm for impure natural raw water, a transversal outlet 14 of diameter 800 mm (i.e. diameter d) for filtered water, a reject outlet 16 with a reject valve 18 for reject impurities/particles filtered from the water.

According to the invention, the filter has, in this case, in total four filter baskets 20a, 20b, 20c, 20d of diameter 400 mm, each having an individual cleaning element 22a, 22b, 22c, 22d mounted on a corresponding piston rod 34a, 34b, 34c, 34d driven by a corresponding individual pneumatic actuator 24a, 24b, 24c, 24d. Each filter basket has an inlet open end 26a, 26b, 26c, 26d, a reject open end 28a, 28b, 28c, 28d, and a wall 30 with filter apertures (only schematically indicated at a portion of one filter basket in the figure, but true for the entire cylindrical walls of all filter baskets).

The filter baskets 20a-d are individually mounted (and thus individually replaceable) with their inlet open ends 26a-d in a first 36 partitioning wall and their reject open ends 28a-d in a second 38 partitioning wall, which partitioning walls between themselves define a common filtrate room 40 the exit of which is the outlet 14. The reject open ends 28a-d of the filter baskets mouths in a common reject chamber 42 that is positioned in the filter's end opposite its inlet and defined by the second partitioning wall 38, the filter body walls 44 (i.e. the filter body envelope surface 44) and the filter's end cover 46. The reject outlet 16 constitutes the exit of the reject chamber 42. The reject outlet 16 can be opened and closed by means of the reject valve 18 that is actuated by a pneumatic actuator 48. The pneumatic actuator 48 for the reject valve 18 as well as the actuators, in this case pneumatic cylinders 24a-d, for the cleaning elements, are governed by an electric and pneumatic control panel 50 that controls the flow of pressurised air in air tubing leading 52 to the respective actuators. A supply P of pressurised air is connected to the control panel. Also, a differential pressure switch 54 (or transmitter) is electrically connected to the control panel 50 and hydraulically connected 60 to two measuring ports 56a and 56b in the filter body 11. The first port 56a is positioned in the wall of the inlet 12 and the second port 56b is positioned in the wall of the filtrate room 40, near the filter baskets inlet open ends 26a-d, close to the first partitioning wall 36.

The filter baskets 20a-d are arranged in parallel with each other and each define a first F1 and a second F2 flow path, for the sake of clarity only indicated for one filter basket 20a. The first flow path F1 defines a liquid flow from the inlet 12, via said filter basket inlet open end 26a and then via said filter apertures in said filter basket wall 30, to said outlet 14. In other words, the first flow path F1 is a flow path from the inlet 12 to the outlet 14 and passes the apertures in the filter basket wall 30, and delivers filtered water from the filter 10. The second flow path F2 defines a liquid flow from said inlet 12, via said filter basket inlet open end 26a and then via said filter basket reject open end 28a, to said reject outlet 16 when said reject valve 18 is open. In other words, the second flow path F2 is a flow path from the inlet 12 to the reject outlet 16, that does not pass the apertures in the filter basket wall 30 and that expels impurity containing reject water from the filter 10. It is understood that the first flow paths F1 for all filter baskets will coincide in the inlet 12, diverge through the filter baskets 20a-d and converge in the outlet 14. Similarly, the second flow paths F2 will coincide in the inlet 12, diverge through the filter baskets 20a-d and converge in the reject chamber 42.

During normal filtering operation, the reject valve 18 is closed and the cleaning elements 22a-d are at rest in the reject chamber 42, pulled out from the filter baskets 20a-d, as shown with dashed lines. Only the first flow paths F1 are active and filtered pressurised water exits from the outlet 14. As described in SE 464 062, the filter basket walls 30 will start to clog from their reject open ends towards their inlet open ends. When a certain predefined degree of clogging of the filter baskets has been reached, the differential pressure switch 54 senses this via the measuring ports 56a and 56b, and then signals to the control panel 50 to start the self-cleaning action. Now, the reject valve 18 is opened and a reject flow (i.e. the flow in the second flow paths F2) commences, since the reject outlet 16 is connected to a lower pressure than the pressure prevailing in the filter 10. First, relatively large particles are expelled this way and after a (settable) predetermined time period, the cleaning elements 22a-d start to travel along the filter baskets' centre axes, a distance at least just past the walls of the outlet 14 or about 2/3 of the filter baskets' lengths, and optionally essentially all the way to the filter baskets' inlet open ends 26a-d. Thereby, according to the principle of Bernoulli, a reversed water flow RF results locally around the cleaning element, thereby releasing impurities stuck in the apertures, which impurities are then expelled through the reject outlet 16 via the second flow path F2, in the same manner as is described in SE 464 062 the contents of which are incorporated herein by reference. The local reversed water flow RF is in fact a local reversed portion of the first flow F1. Note that no scraping occurs but instead there is a gap 32 between the edges of a cleaning element and the corresponding filter basket wall.

Each cleaning element 22a-d preferably makes 1-4 strokes with the piston rod 34a-d going out once from the cleaning element actuator/cylinder 24a-d and in again during each stroke. Thus the cleaning elements 22a-d will travel both in the direction against the second flow path F2 and in the same direction as it, cleaning the filter basket walls 30 in both directions. After completed action of the cleaning elements 22a-d the reject valve 18 closes again and the cleaning elements 22a-d stop in their rest position.

According to the invention, the outlet is formed from a downstream end piece 82 which is defined by having a circular cylindrical cross-section with a diameter d, ending with a circular flange 84 that is to be connected to an outlet pipe, and a transition piece 80 that interconnects the opening in the filter body 11 with said end piece 82. Said opening has a major axis in the circumferential direction of the filter body that is longer than it would be if the outlet had a circular cylindrical cross-section at its connection to the filter body. Accordingly, the outlet is of non-circular cylindrical cross-section at its connection to the filter body.

From Fig. 1 it is clear that in the vertical plane, the outlet 14 is conically diverging in the flow direction. At the same time, it is clear from Fig. 2 that in the horizontal plane, the outlet 14 is conically converging in the flow direction. Thereby, in comparison with a circular cylindrical outlet, flow is facilitated from the rear filter baskets 20a, 20d, at the same time as the "non-productive" length portion of the filter baskets above the centre line of the outlet is minimized because the outlet can be positioned higher up. Also, the comparatively short distance of the opening in the in the axial direction of the filter body makes sure that the cleaning elements 22a-d have travelled well past the walls of the outlet 14 when they reach their turning position at about 2/3 of the filter baskets' lengths. Note that preferably, the opening for the outlet in the filter body is positioned in the filtrate room 40 adjacent to the second 38 partitioning wall such that the end piece 82 is positioned partly above (distal in relation to the inlet) the second partitioning wall.

Fig. 3 shows the opening 86 in the filter body envelope surface 44 as it would appear if the envelope surface had been laid out flat. The opening 86 has a minor axis x in a direction essentially parallel with the axial filter basket(s) and a major axis y that is perpendicular to said minor axis x and constitutes the longest chord of the opening. (In Fig. 2 the filter body envelope surface 44 is shown in its true cylindrical form and therefore the major axis y constitutes an arc length y.) The shape of the opening 86 can be defined by a curve that connects the outer boundaries of a first inscribed circle 90 of diameter x with two smaller inscribed circles 88a, b, preferably of diameter 0.1-0.8x, even more preferred 0.2-0.6x, that are positioned on either side of the first inscribed circle 90 at a total distance equal to said major axis y. Alternatively, the opening may be a true ellipse having a minor axis x. It should be noted that for a filter body with a diameter D > 1.5d and having an outlet that is circular cylindrical over its entire length, the major axis y in the opening in the envelope surface that has been laid out flat is smaller than 1.1d.

### EXAMPLE

A prototype filter with an inlet diameter of 150 mm was provided with four filter baskets of perforated plate, with a filtration degree of 1 mm. Each filter basket had an individual cleaning element operable by a corresponding individual pneumatic actuator. The filter had one filtrate room and one reject chamber with one reject outlet in common for all filter baskets. The filter had a transparent end cover so that the degree of dirt accumulation and cleaning action in the different filter baskets could be visually evaluated. Dirt accumulation was also verified by opening the filter and removing the baskets for visual examination. A differential pressure switch was arranged to signal when a predefined degree of clogging had been reached. Water that contained dirt in the form of shells and seaweed was filtered.

It was found that when a conventional circular cylindrical outlet was used, very little dirt had accumulated in the rear baskets when the differential pressure switch signalled due to clogging of the front baskets. The filter was then converted by replacing the outlet with an outlet according to the invention, which resulted in far better usage of the area of all filter baskets in dirt accumulation and a lower pressure loss from inlet to outlet.

The invention is not limited to the described embodiments but may be varied within the scope of the claims. Especially, it is realised that the skilled man, without any inventive work, can compose other combinations of the preferred aspects of the invention. Moreover, the actuators 24a-d and 48 may be electrically or hydraulically operated. The number of differential pressure switches (or transmitters) 54 may be more than one whereby cleaning operation can be initiated when any one of the differential pressure switches gives signal. Cleaning operation can in addition be initiated by timer as well as manually. Especially, the filter according to the present invention can be devised such that the actuators can be operated in sequence: one by one or group wise. A stop may then be provided for the second flow paths in filter baskets that are not being cleaned while others are. Two or more filter baskets may share a common cleaning element operable by a corresponding common actuator. The filter baskets may then be mounted in a revolver unit that is provided with drive means able to revolve said revolver unit about a centre axis of the filter body.

## Claims

1. Self-cleaning filter (10) for the filtering of a pressurised liquid, which filter has a filter body (11) with a diameter D, that comprises and/or houses:
a) an inlet (12),
b) an axial filter basket (20a) with an inlet open end (26a), a reject open end (28a) and a wall (30) with filter apertures,
c) a transversal outlet (14), and
d) a reject outlet (16) with a reject valve (18);
together defining a first (F1) and a second (F2) flow path for incoming pressurised liquid; where:
- said first flow path (F1) is from said inlet (12), via said filter basket inlet open end (26a) and then via said filter apertures in said filter basket wall (30), to said transversal outlet (14); and
- said second flow path (F2) is from said inlet (12), via said filter basket inlet open end (26a) and then via said filter basket reject open end (28a), to said reject outlet (16) when said reject valve (18) is open;
said filter body (11) furthermore housing a cleaning element (22a) operable by an actuator (24a) to travel along said filter basket's (20a) centre axis, whereby a travelling gap (32) is formed between said cleaning element (22a) and an inside of said filter basket wall (30), thereby significantly increasing the velocity of the liquid in said gap and its proximity, which increased velocity results in a locally decreased pressure and thus a reversed liquid flow (RF) through said filter apertures in said filter basket wall (30), thus releasing impurities stuck in the apertures, which impurities are then led out from the filter (10) through said reject outlet (16) via said second flow path (F2) when said reject valve (18) is open;
**characterised in that** said transversal outlet (14) comprises:
an upstream end which is defined by an opening (86) in the filter body envelope surface (44), which opening has a minor axis x in a direction essentially parallel with the axial filter basket (20a) and a major axis y that is perpendicular to said minor axis x, a downstream end piece (82) which is defined by having a circular cylindrical cross-section with a diameter d, and a transition piece (80) that interconnects said opening (86) with said end piece (82);
where D > 1.5d, x < d, and y> 1.1d.

2. Self-cleaning filter according to claim 1, **characterised in that** y > 1.2d, preferably y > 1.4d and most preferred y > 1.6d.

3. Self-cleaning filter according to claim 1 or 2, **characterised in that** x < 0.9d, preferably x < 0.8d and most preferred x < 0.7d.

4. Self-cleaning filter according to any one of the preceding claims,
**characterised in that** said opening (86) has a shape defined by a a curve that connects the outer boundaries of a first inscribed circle (90) with two smaller inscribed circles (88a, b) that are positioned on either side of said first inscribed circle (90) at a total distance equal to said major axis y.

5. Self-cleaning filter according to any one of the preceding claims, **characterised in that** a filtrate room (40) the exit of which is said outlet (14), is defined by a first partitioning wall (36), a second partitioning wall (38) and said filter body envelope surface (44), where said opening (86) is positioned in said filtrate room (40) adjacent to said second (38) partitioning wall such that said end piece (82) is positioned partly distal to said second partitioning wall.

6. Self-cleaning filter according to any one of the preceding claims,
**characterised in that** said filter body (11) also houses one or more additional filter baskets (20b, 20c, 20d) arranged in parallel with said first filter basket (20a), defining additional first (F1) and second (F2) flow paths.

7. Self-cleaning filter according to claim 6, **characterised in that** each filter basket (20a-d) has an individual cleaning element (22a-d) operable by a corresponding individual actuator (24a-d).

8. Self-cleaning filter according to claim 7, **characterised in that** all said actuators (24a-d) are arranged to be operated essentially simultaneously, whereby all filter baskets (20a-d) are cleaned simultaneously.

9. Self-cleaning filter according to any one of claims 6-8, **characterised in that** the filter body (11) comprises a reject chamber (42) that is common for all filter baskets (20a-d), and is defined by the envelope surface (44) of said filter body and/or an end cover (46), and is positioned at an opposite end of said filter body to said inlet (12), said reject outlet (16) constituting an exit from said reject chamber (42).

10. A method of cleaning a self-cleaning filter according to any one of claims 7-9, comprising the steps of:
f) opening said reject valve (18);
g) operating all said individual actuators (24a-d) essentially simultaneously so that said individual cleaning elements (22a-d) travel along said filter baskets' (20a-d) centre axes in a direction towards their inlet open ends (26a-d);
h) immediately after step b, operating all said individual actuators (24a-d) essentially simultaneously so that said individual cleaning elements (22a-d) travel along said filter baskets' (20a-d) centre axes in a direction towards and out from their reject open ends (28a-d);
i) optionally repeating steps b-c,
j) closing said reject valve (18).

## Patentansprüche

1. Selbstreinigender Filter (10) für das Filtern einer unter Druck stehenden Flüssigkeit, wobei der Filter ein Filtergehäuse (11) mit einem Durchmesser D aufweist, welches umfasst und/oder aufnimmt:
a) einen Einlass (12),
b) einen axialen Filterkorb (20a) mit einem offenen Einlassende (26a), einem offenen Auswurfende (28a) und einer Wand (30) mit Filteröffnungen,
c) einen transversalen Auslass (14), und
d) einen Auswurfauslass (16) mit einem Auswurfventil (18);
die zusammen einen ersten (F1) und einen zweiten (F2) Strömungsweg für eintretende, unter Druck stehende, Flüssigkeit definieren; wobei:
- der erste Strömungsweg (F1) von dem Einlass (12) über das offene Filterkorb-Einlassende (26a) und dann über die Filteröffnungen in der Filterkorbwand (30) zu dem transversalen Auslass (14) verläuft; und
- der zweite Strömungsweg (F2) von dem Einlass (12) über das offene Filterkorb-Einlassende (26a) und dann über das offene Auswurfende (28a) des Filterkorbs zu dem Auswurfauslass (16) verläuft, wenn das Auswurfventil (18) offen ist;
wobei in dem Filtergehäuse (11) weiterhin ein Reinigungselement (22a) aufgenommen ist, das durch einen Stellantrieb (24a) betreibbar ist, um sich entlang der Mittelachse des Filterkorbs (20a) zu bewegen, wodurch eine sich bewegende Lücke (32) zwischen dem Reinigungselement (22a) und einer Innenseite der Filterkorbwand (30) gebildet wird, so dass die Geschwindigkeit der Flüssigkeit in der Lücke und deren Nähe signifikant erhöht wird, wobei die erhöhte Geschwindigkeit in einem lokal erniedrigten Druck resultiert und somit in einem umgekehrten Flüssigkeitsstrom (RF) durch die Filteröffnungen in der Filterkorbwand (30), somit werden Verunreinigungen, die in den Öffnungen hängengeblieben sind, gelöst, wobei die Verunreinigungen dann aus dem Filter (10) heraus durch den Auswurfauslass (16) über den zweiten Strömungsweg (F2) geleitet werden, wenn das Auswurfventil (18) offen ist;
**dadurch gekennzeichnet, dass** der transversale Auslass (14) umfasst:
ein zulaufseitiges Ende, das durch eine Öffnung (86) in der Filtergehäuse-Ummantelungsoberfläche (44) definiert ist, wobei die Öffnung eine Nebenachse x in einer Richtung im Wesentlichen parallel mit dem axialen Filterkorb (20a) und eine Hauptachse y, welche rechtwinklig zu der Nebenachse x verläuft, aufweist,
ein ablaufseitiges Endstück (82), das dadurch definiert ist, dass es einen kreiszylindrischen Querschnitt mit einem Durchmesser d aufweist,
und ein Übergangsstück (80), das die Öffnung (86) mit dem Endstück (82) koppelt; wobei D > 1,5d, x < d, und y > 1,1d.

2. Selbstreinigender Filter gemäß Anspruch 1, **dadurch gekennzeichnet, dass** y > 1,2d, bevorzugt y > 1,4d und am meisten bevorzugt y > 1,6d.

3. Selbstreinigender Filter gemäß Anspruch 1 oder 2, **dadurch gekennzeichnet, dass** x < 0,9d, bevorzugt x < 0,8d und am meisten bevorzugt x < 0,7d.

4. Selbstreinigender Filter gemäß einem der vorstehenden Ansprüche, **dadurch gekennzeichnet, dass** die Öffnung (86) eine Form aufweist, die definiert ist durch eine Kurve, die die äußeren Ränder eines ersten einbeschriebenen Kreises (90) mit zwei kleineren einbeschriebenen Kreisen (88a, b), die auf jeder Seite des ersten einbeschriebenen Kreises (90) in einem Gesamtabstand gleich der Hauptachse y positioniert sind, verbindet.

5. Selbstreinigender Filter gemäß einem der vorstehenden Ansprüche, **dadurch gekennzeichnet, dass** ein Filtratraum (40), dessen Ausgang der Auslass (14) ist, definiert ist durch eine erste Trennwand (36), eine zweite Trennwand (38) und die Filtergehäuse-Ummantelungsoberfläche (44), wobei die Öffnung (86) in dem Filtratraum (40) benachbart zu der zweiten Trennwand (38) positioniert ist, so dass das Endstück (82) teilweise distal zu der zweiten Trennwand positioniert ist.

6. Selbstreinigender Filter gemäß einem der vorstehenden Ansprüche, **dadurch gekennzeichnet, dass** in dem Filtergehäuse (11) auch ein oder mehrere zusätzliche, nebeneinanderliegend mit dem ersten Filterkorb (20a) angeordnete, Filterkörbe (20b, 20c, 20d) aufgenommen sind, die zusätzliche erste (F1) und zweite (F2) Strömungswege definieren.

7. Selbstreinigender Filter gemäß Anspruch 6, **dadurch gekennzeichnet, dass** jeder Filterkorb (20a-d) ein individuelles Reinigungselement (22a-d) aufweist, das durch einen korrespondierenden individuellen Stellantrieb (24a-d) betreibbar ist.

8. Selbstreinigender Filter gemäß Anspruch 7, **dadurch gekennzeichnet, dass** alle der Stellantriebe (24a-d) angeordnet sind, um im Wesentlichen gleichzeitig betrieben zu werden, wodurch alle Filterkörbe (20a-d) gleichzeitig gereinigt werden.

9. Selbstreinigender Filter gemäß einem der Ansprüche 6-8, **dadurch gekennzeichnet, dass** das Filtergehäuse (11) eine Auswurfkammer (42) umfasst, welche allen Filterkörben (20a-d) gemeinsam ist, und definiert ist durch die Ummantelungsoberfläche (44) des Filtergehäuses und/oder eine Endabdeckung (46), und positioniert ist an einem dem Einlass (12) gegenüberliegenden Ende des Filtergehäuses, wobei der Auswurfauslass (16) einen Ausgang von der Auswurfkammer (42) festlegt.

10. Verfahren zum Reinigen eines selbstreinigenden Filters gemäß einem der Ansprüche 7-9, umfassend die Schritte von:
a) Öffnen des Auswurfventils (18);
b) Betreiben aller der individuellen Stellantriebe (24a-d) im Wesentlichen gleichzeitig, so dass die individuellen Reinigungselemente (22a-d) sich entlang der Mittelachsen der Filterkörbe (20a-d) bewegen, in einer Richtung auf ihre offenen Einlassenden (26a-d) zu;
c) unmittelbar nach Schritt b, Betreiben aller der individuellen Stellantriebe (24a-d) im Wesentlichen gleichzeitig, so dass die individuellen Reinigungselemente (22a-d) sich entlang der Mittelachsen der Filterkörbe (20a-d) bewegen, in einer Richtung zu auf ihre und heraus aus ihren Auswurfenden (28a-d);
d) wahlweise Wiederholen der Schritte b-c,
e) Schließen des Auswurfventils (18).

## Revendications

1. Filtre autonettoyant (10) pour le filtrage d'un liquide sous pression, lequel filtre comporte un corps de filtre (11) ayant un diamètre D, qui comprend et / ou héberge :
a) un orifice d'entrée (12),
b) un panier formant filtre axial (20a) avec une extrémité ouverte d'entrée (26a), une extrémité ouverte de rejet (28a) et une paroi (30) avec des ouvertures de filtre,
c) un orifice de sortie transversale (14), et
d) un orifice de sortie de rejet (16) ayant une valve de rejet (18) ;
définissant conjointement un premier (F1) et un deuxième (F2) trajet d'écoulement pour un liquide sous pression entrant ; dans lequel :
- ledit premier trajet d'écoulement (F1) s'étend depuis ledit orifice d'entrée (12), passe par ladite extrémité ouverte d'entrée de panier formant filtre (26a) et par lesdites ouvertures de filtre aménagées dans ladite paroi de panier formant filtre (30), jusqu'audit orifice de sortie transversale (14) ; et
- ledit deuxième trajet d'écoulement (F2) s'étend depuis ledit orifice d'entrée (12), passe par ladite extrémité ouverte d'entrée de panier formant filtre (26a) et par ladite extrémité ouverte de rejet de panier formant filtre (28a), jusqu'audit orifice de sortie de rejet (16) lorsque ladite valve de rejet (18) est ouverte ;
ledit corps de filtre (11) logeant en outre un élément de nettoyage (22a) apte à être actionné par un actionneur (24a) de façon à se déplacer le long dudit axe central du panier formant filtre (20a), un intervalle de déplacement (32) étant formé entre ledit élément de nettoyage (22a) et une partie intérieure de ladite paroi de panier formant filtre (30), ce qui augmente significativement la vitesse du liquide dans ledit intervalle et sa proximité, laquelle vitesse augmentée entraine une pression diminuée localement et donc un écoulement de liquide inversé (RF) à travers lesdites ouvertures de filtre aménagées dans ladite paroi du panier formant filtre (30), libérant ainsi les impuretés collées dans les ouvertures, lesquelles impuretés sont dirigées hors du filtre (10) à travers ledit orifice de sortie de rejet (16) via ledit deuxième trajet d'écoulement (F2) lorsque ladite valve de rejet (18) est ouverte ;
**caractérisé en ce que** ledit orifice de sortie transversale (14) comprend :
une extrémité amont qui est définie par une ouverture (86) dans la surface d'enveloppe du corps de filtre (44), dont l'ouverture a un petit axe x dans une direction sensiblement parallèle au panier formant filtre axial (20a) et un grand axe y qui est perpendiculaire audit petit axe x, une pièce d'extrémité aval (82) qui est définie comme ayant une section transversale cylindrique circulaire avec un diamètre d et une pièce de transition (80) qui interconnecte ladite ouverture (86) avec ladite pièce d'extrémité (82);
dans lequel D > 1,5d, x < d, et y > 1,1d.

2. Filtre autonettoyant selon la revendication 1, **caractérisé en ce que** y > 1,2d, de préférence y > 1,4d et de façon la plus préférée y > 1,6d.

3. Filtre autonettoyant selon la revendication 1 ou la revendication 2, **caractérisé en ce que** x < 0,9d, de préférence x < 0,8d et de façon la plus préférée x < 0,7d.

4. Filtre autonettoyant selon l'une quelconque des revendications précédentes, **caractérisé en ce que** ladite ouverture (86) a une forme définie par une courbe reliant les limites extérieures d'un premier cercle inscrit (90) et deux cercles inscrits plus petits (88a, b) qui sont positionnés de chaque côté dudit premier cercle inscrit (90) à une distance totale égale audit grand axe y.

5. Filtre autonettoyant selon l'une quelconque des revendications précédentes, **caractérisé en ce qu'**une chambre de filtrat (40) dont la sortie est ledit orifice de sortie (14), est définie par une première paroi de séparation (36), une deuxième paroi de séparation (38) et ladite surface d'enveloppe du corps de filtre (44), ladite ouverture (86) étant positionnée dans ladite chambre de filtrat (40) de façon adjacente à ladite deuxième paroi de séparation (38) de telle sorte que ladite pièce d'extrémité (82) soit positionnée de façon partiellement distale par rapport à ladite deuxième paroi de séparation.

6. Filtre autonettoyant selon l'une quelconque des revendications précédentes, **caractérisé en ce que** ledit corps de filtre (11) abrite également un ou plusieurs paniers de filtre supplémentaires (20b, 20c, 20d), disposés en parallèle avec ledit premier panier formant filtre (20a), définissant un première (F1) et un deuxième (F2) trajets d'écoulement supplémentaires.

7. Filtre autonettoyant selon la revendication 6, **caractérisé en ce que** chaque panier formant filtre (20a-d) comporte un élément de nettoyage individuel (22a-d) pouvant être actionné par un actionneur individuel correspondant (24a-d).

8. Filtre autonettoyant selon la revendication 7, **caractérisé en ce que** tous lesdits actionneurs (24a-d) sont agencés pour fonctionner essentiellement simultanément, de sorte que tous les paniers de filtre (20a-d) sont nettoyés simultanément.

9. Filtre autonettoyant selon l'une quelconque des revendications 6 à 8, **caractérisé en ce que** le corps de filtre (11) comprend une chambre de rejet (42) qui est commune pour tous les paniers de filtre (20a-d), et est définie par la surface d'enveloppe (44) dudit corps de filtre et / ou d'un couvercle d'extrémité (46) et est positionnée à une extrémité opposée dudit corps de filtre par rapport audit orifice d'entrée (12), ledit orifice de sortie de rejet (16) constituant une sortie pour ladite chambre de rejet.

10. Un procédé de nettoyage d'un filtre autonettoyant selon l'une quelconque des revendications 7 à 9, comprenant les étapes consistant à:
a) ouvrir ladite valve de rejet (18);
b) manoeuvrer tous lesdits actionneurs individuels (24a-d) essentiellement simultanément de sorte que lesdits éléments de nettoyage individuels (22a-d) se déplacent le long des axes centraux desdits paniers de filtre (20a-d) dans une direction orientée vers leurs extrémités d'ouverture d'entrée (26a-d);
c) immédiatement après l'étape b, manoeuvrer tous lesdits actionneurs individuels (24a-d) essentiellement simultanément de sorte que lesdits éléments de nettoyage individuels (22a-d) se déplacent le long desdits axes centraux des paniers de filtre (20a-d) dans une direction orientée vers leur extrémités ouvertes de rejet (28a-d) et à partir de ces dernières;
d) optionnellement, répéter les étapes b-c,
e) fermer ladite valve de rejet (18).
